# EUROPÄISCHE PATENTSCHRIFT

(11) **EP 1 207 325 B1**
(45) Veröffentlichungstag und Bekanntmachung des Hinweises auf die Patenterteilung: **02.03.2005**
(21) Anmeldenummer: 01127587.2
(22) Anmeldetag: 19.11.2001
(51) Int. Cl.: F16K 1/226

(54) **Absperrarmatur**
Shut-off valve
Soupape d'arrêt

(30) Priorität: 20.11.2000 DE 10057408
(43) Veröffentlichungstag der Anmeldung: 22.05.2002
(73) Patentinhaber: Linde Aktiengesellschaft, 65189 Wiesbaden (DE)
(72) Erfinder: Gläser, Ilona, 85416 Langenbach (DE); Gerceker, Metin, 86356 Neusäss (DE); Mühlauer, Peter, 86356 Neusäss (DE)
(74) Vertreter: Geirhos, Johann

(56) Entgegenhaltungen:
- DE-A- 19 515 014
- US-A- 5 707 040

## Beschreibung

Die Erfindung betrifft eine Absperrarmatur zum Absperren von Verunreinigungen enthaltenden Medien, mit einem Gehäuse und einer drehbar gelagerten Drehklappe, wobei zwischen dem Gehäuse und der Drehklappe eine ringförmige Dichteinrichtung angeordnet ist, die von zumindest zwei voneinander in Durchströmungsrichtung der Absperrarmatur axial beabstandeten metallischen Dichtelementen gebildet ist.

Derartige Absperrarmaturen mit einem Gehäuse und einer Drehklappe sind bekannt und werden zur Absperrung verschiedenster Medien in Fluidleitungen eingesetzt.

Bei bekannten Absperrarmaturen ist die Dichteinrichtungen aus einer Kombination von metallischen Dichtsitzen und elastischen Dichtsitzen bekannt. Die elastischen Dichtsitze wird hierbei von einem beispielsweise aus Kunststoff bestehenden Dichtelement gebildet. Eine derartige Absperrarmatur ist beispielsweise aus der DE 195 15 014 A1 bekannt.

Mit derartigen Absperrarmaturen kann jedoch bei Medien, die Verunreinigungen enthalten, beispielsweise Spaltgas, cas als Verunreinigung Koks enthält, das sich an den Dichtsitzen ablagert und festsetzt, eine ausreichend sichere Abdichtung nich. gewährleistet werden. Durch die Verunreinigungen an dem elastischen Dichtsitz kommt es bei dem elastischen Dichtelement bei der Betätigung der Absperrarmatur in die Sperrstellung innerhalb weniger Betätigungen zu Beschädigungen und somit zu einem Versagen des Dichtelements, wodurch eine sichere Abdichtung des Mediums nicht mehr gewährleistet werden kann.

Der vorliegenden Erfindung liegt die Aufgabe zugrunde, eine Absperrarmatur zur Verfügung zu stellen, die bei Verunreinigungen enthaltenden Medien mit geringem Bauaufwand eine sichere Abdichtung ermöglicht.

Diese Aufgabe wird erfindungsgemäß dadurch gelöst, dass die metallischen Dichtelemente mit einer metallischen Dichtfläche in Wirkverbindung bringbar sind, wobei die Dichtfläche und die Dichtelemente gehärtete Oberflächen aufweisen. Die Dichteinrichtung besteht somit aus zumindest zwei metallischen Dichtelementen, die mit einer Dichtfläche zusammenwirken. Durch die gehärteten Oberflächen an der Dichtfläche und den Dichtelementen kann auf einfache Weise eine hohe Verschleißbeständigkeit der Dichteinrichtung erzielt werden. Metallische Dichtelemente und eine metallische Dichtfläche sind verschleißbeständig und somit unempfindlich gegenüber an den Dichtsitzen abgelagerten Verunreinigungen, wodurch auf einfache Weise eine Versagen der Dichtelemente vermieden und eine sichere Absperrung ermöglicht werden kann. Zudem weisen metallische Dichtelemente, die mit einer metallischen Dichtfläche zusammenwirken, einen geringen Herstellaufwand auf, wodurch eine erfindungsgemäße Absperrarmatur die Absperrung eines Verunreinigungen enthaltenden Mediums mit geringem Bauaufwand ermöglicht.

Gemäß einer bevorzugten Ausführungsform der Erfindung ist die Dichtfläche als kegelförmige Dichtfläche ausgebildet und sind die Dichtelemente als ringförmige Metalllippen ausgebildet, die unterschiedliche Durchmesser aufweisen. Mit kreisringförmigen Metalllippen, die im Bereich des Dichtsitzes einen kreisförmigen Querschnitt aufweisen, und einer kegelförmigen Dichtfläche kann auf einfache Weise eine sichere Abdichtung erzielt werden.

Besondere Vorteile ergeben sich, wenn die Dichtelemente an der Drehklappe und die Dichtfläche am Gehäuse angeordnet sind. Die Dichtelemente können an der Drehklappe auf einfache Weise ausgebildet bzw. befestigt werden. Zudem kann eine kegelförmige Dichtfläche am Gehäuse auf einfache Weise ausgebildet werden. Durch die Anordnung der kegelförmigen Dichtfläche am Gehäuse ergibt sich bei geöffneter Absperrarmatur am Gehäuse ein glatte Anströmfläche für das Medium, wodurch die Ablagerung von Verunreinigungen an der Dichtfläche auf einfache Weise reduziert werden kann.

Zweckmäßigerweise sind die Dichtelemente an zumindest einem Metallring ausgebildet, der an der Drehklappe befestigt ist. Ein Metallring, der mit beiden Metalllippen versehen ist bzw. zwei Metallringe, die mit jeweils einer Metalllippe versehen sind, können auf einfache Weise hergestellt werden, wodurch die Dichtelemente mit geringem Herstellaufwand an der Drehklappe angeordnet werden können.

Gemäß einer Weiterbildung der Erfindung ist am Gehäuse in Durchströmungsrichtung vor der Dichtfläche eine Gehäuseverengung angeordnet. Mit einer Gehäuseverengung, die in Strömungsrichtung vor der Dichtfläche angeordnet ist und die Dichtfläche zumindest teilweise abdeckt, kann auf einfache Weise eine Umlenkung der Strömung des Mediums erzielt werden und somit eine direkte Anströmung der Dichtfläche am Gehäuse durch das Medium vermieden werden. Hierdurch kann die Ablagerung von Verunreinigungen an der Dichtfläche mit geringem Aufwand reduziert werden.

Zweckmäßigerweise ist die Gehäuseverengung als radiale Nut im Gehäuse ausgebildet. Mit einer sich nach Innen erstreckenden Nut kann im Gehäuse mit geringem Herstellaufwand eine Gehäuseverengung gebildet werden.

Besondere Vorteile ergeben sich gemäß einer bevorzugten Weiterbildung der Erfindung, wenn eine Schutzeinrichtung zum Schutz der Dichtelemente bei geöffneter Drehklappe vorgesehen ist. Hierdurch kann die direkte Anströmung der Dichtelemente bei geöffneter Drehklappe durch das Medium verhindert werden, wodurch auf einfache Weise die Ablagerung von Verunreinigungen an den Dichtelementen reduziert werden kann.

Ein einfacher Bauaufwand ergibt sich hierbei, wenn die Schutzeinrichtung als im Gehäuse angeordnetes Blech, insbesondere in Strömungsrichtung V-förmiges Blech, ausgebildet ist. Mit einem in Strömungsrichtung V-förmigen Blech, hinter dem die Metalllippen bei geöffneter Drehklappe angeordnet sind, kann bei geringen Anströmverlusten und somit Strömungsverlusten eine Abdeckung der Metaillippen erzielt werden.

In einer vorteilhaften Weiterbildung der Erfindung ist zwischen den Dichtelementen ein Ringraum ausgebildet ist, der mit Sperrmedium und/oder Spülmedium beaufschlagbar ist. Der Ringraum bildet hierbei eine Block- und Bleedeinrichtung mit der die Dichtfunktion der Absperrarmatur in allen Betriebsbedingungen überprüft werden kann. Zudem kann durch die Beaufschlagung des Ringraums mit einem Sperrmedium oder einem Spülmedium, beispielsweise Stickstoff oder Dampf, eine sichere Absperrung und Separierung erzielt werden.

Besondere Vorteile ergeben sich, wenn die Drehklappe exzentrisch, vorzugsweise doppel-exzentrisch, gelagert ist. Hierdurch kann eine bestmögliche Abdichtung der Absperrarmatur erzielt werden. Die Drehklappe ist hierbei von der Drehachse beabstandet, wodurch eine erste Exzentrität erzielt wird. Zudem weist die Drehachse von der Mittelachse der Absperrarmatur einen Abstand auf, der eine zweite Exzentrität bildet. Mit einer derartigen doppel-exzentrischen Lagerung der Drehklappe wird erzielt, dass beim Schließen der Absperrarmatur die Dichtflächen der Drehklappe und des Gehäuses erst kurz vor dem Erreichen der Sperrstellung aufeinander zu legen kommen, wodurch eine verbesserte Abdichtung und ein geringer Verschleiß der Dichteinrichtung erzielt wird. Die Dichteinrichtung wird hierbei eine kurze Wegstrecke schleifend über die Dichtfläche bewegt. Durch die als Metalllippen ausgebildete Dichteinrichtung können bei dieser schleifenden Bewegung an der Dichtfläche und den Metalllippen vorhandene Ablagerungen abgeschabt und somit entfernt werden, wodurch eine sicheres Anliegen der Metalllippen an der Dichtfläche erzielt wird.

Besondere Vorteile ergeben sich bei der Verwendung einer erfindungsgemäßen Absperrarmatur in einer Ethylenanlage. Bei Ethylenanlagen, in denen mittels der erfindungsgemäßen Absperrarmatur Spaltgas in Fluidleitungen abgesperrt wird, ergibt sich eine hohe Betriebssicherheit und eine sichere Absperrung durch die Absperrarmatur, da im Spaltgas enthaltene Verunreinigungen, beispielsweise Koks, die sich an den Metalllippen oder der Dichtfläche abgelagert haben, beim Bewegen der Drehklappe in die Sperrstellung mittels der Metalllippen abgeschabt werden. Durch die metallische Dichtfläche und die Metallippen wird hierbei ein Verschleiß und somit ein Versagen der Dichteinrichtung wirksam vermieden.

Weitere Vorteile und Einzelheiten der Erfindung werden anhand des in den schematischen Figuren dargestellten Ausführungsbeispiels näher erläutert. Hierbei zeigt
- Figur 1: eine erfindungsgemäße Absperrarmatur im Längsschnitt,
- Figur 2: die erfindungsgemäße Absperrarmatur im Querschnitt und
- Figur 3: die Dichteinrichtung in einer vergrößerten Darstellung.

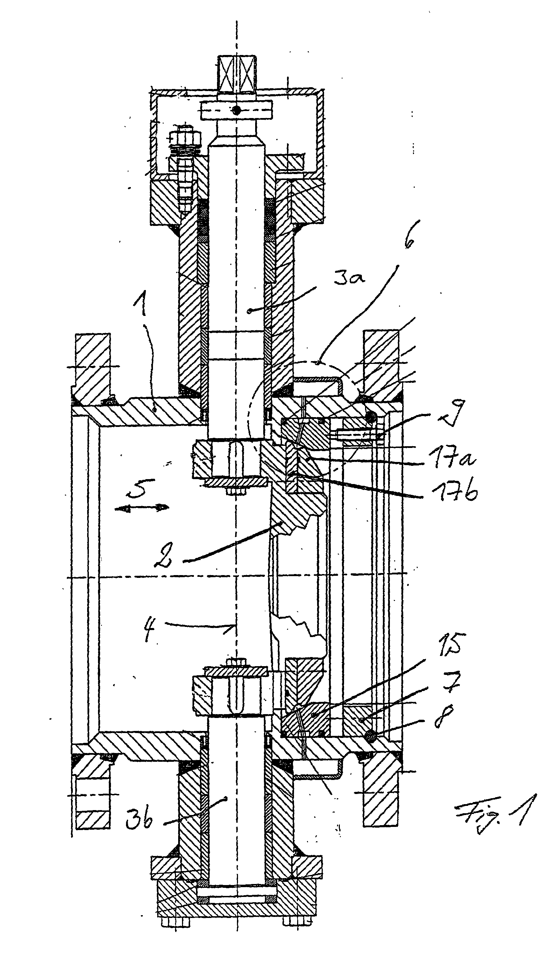

In der Figur 1 ist eine erfindungsgemäße Absperrarmatur in einem Längsschnitt gezeigt. Die Absperrarmatur weist ein Gehäuse 1 auf, in dem eine Drehklappe 2 doppel-exzentrisch drehbar gelagert ist. In der Figur 1 ist die Drehklappe 2 in der Sperrstellung gezeigt. Die Drehklappe 2 ist mittels einer geteilten Antriebswelle 3a, 3b um eine Drehachse 4 drehbar gelagert. In geöffneter Stellung ist die Absperrarmatur in Durchflussrichtung 5 von Medium durchströmbar. Die Absperrarmatur weist eine Dichteinrichtung 6 auf, die über einen Befestigungsring 7, eine Halteeinrichtung 8 und mehrere Befestigungsschrauben 9 mit dem Gehäuse 1 verspannt ist.

Die Drehklappe 2 ist von der Drehachse 4 in axialer Richtung der Absperrarmatur beabstandet, wodurch eine erste Exzentrizität gebildet ist.

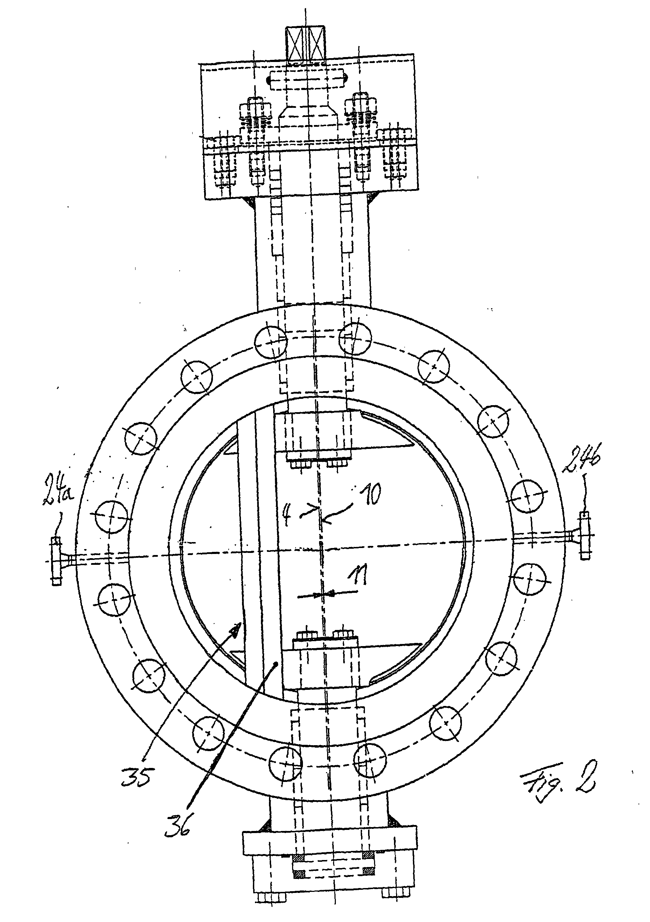

In der Figur 2 ist die Absperrarmatur im Querschnitt dargestellt, wobei ersichtlich ist, dass die Drehachse 4 und die Mittelachse 10 der Absperrarmatur einen Abstand 11 aufweisen, wodurch eine zweite Exzentrizität gebildet ist.

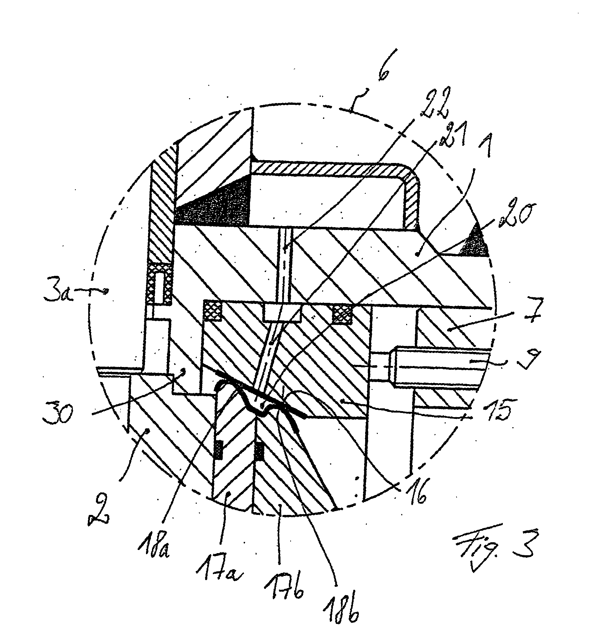

Die Dichteinrichtung 6 ist in der Figur 3 in einer vergrößerten Darstellung gezeigt. Die Dichteinrichtung 6 umfasst eine im Gehäuse 1 mittels des Befestigungsringes 7, der Halteeinrichtung 8 und den Befestigungsschrauben 9 befestigten Metallring 15, der mit einer kegelförmigen, sich nach Innen verjüngenden Dichtfläche 16 versehen ist. An der Drehklappe 2 sind als Metallringe ausgebildete Dichtelemente 17a, 17b befestigt, die in axialer Richtung der Absperrarmatur beabstandet sind. Jeder Metallring ist im Bereich der Dichtfläche 16 mit einer Metalllippe 18a, 18b versehen, die einen kreisförmigen Querschnitt aufweisen. Die Metalllippen 18a, 18b und die Dichtfläche 16 weisen hierbei gehärtete Oberflächen auf.

Zwischen den Metalllippen 18a, 18b ist ein Ringraum 20 ausgebildet, der über eine in dem Metallring 15 ausgebildete Verbindungsbohrung 21 und eine im Gehäuse 1 ausgebildete Verbindungsbohrung 22 mit einem Raum 23 in Verbindung steht, der mit Anschlüssen 24a, 24b in Verbindung steht. Mittels der Anschlüsse 24a, 24b ist der Ringraum 20 mit Sperrmedium bzw. Spülmedium beaufschlagbar.

Im Gehäuse 1 ist im Bereich der Dichtfläche 16 an einem dem Befestigungsring 7 gegenüberliegenden Bereich eine Gehäuseverengung 30 ausgebildet. Die Gehäuseverengung 30 kann hierbei von einer sich radial nach Innen erstreckenden Nut des Gehäuses 1 gebildet werden. Der Innendurchmesser der Nut ist derart ausgebildet, dass die Nut die Dichtfläche 16 zumindest teilweise abdeckt. In der geöffneten Stellung der Drehklappe 2 wird hierdurch eine Strömungsverengung erzielt, wodurch eine Strömungsumlenkung erfolgt, die eine direkte Anströmung der Dichtfläche 16 verhindert und somit eine Ablagerung von im Medium enthaltenden Verunreinigungen an der Dichtfläche 16 vermindert.

Um in der geöffneten Stellung der Drehklappe 2 eine direkte Anströmung der Metalllippen 17a, 17b zu verhindern, ist - wie aus der Figur 2 ersichtlich ist - eine Schutzeinrichtung 35 im Gehäuse 1 angeordnet. Die Schutzeinrichtung 35 ist als Blech 36 ausgebildet, das in Strömungsrichtung einen beispielsweise V-förmigen Querschnitt aufweist. Hierdurch kann in der geöffneten Stellung der Drehklappe 2 die Ablagerung von Verunreinigungen an den Metalllippen 18a, 18b wirksam verringert werden.

## Patentansprüche

1. Absperrarmatur zum Absperren von Verunreinigungen enthaltenden Medien, mit einem Gehäuse und einer drehbar gelagerten Drehklappe, wobei zwischen dem Gehäuse und der Drehklappe eine ringförmige Dichteinrichtung angeordnet ist, die von zumindest zwei voneinander in Durchströmungsrichtung der Absperrarmatur axial beabstandeten metallischen Dichtelementen gebildet ist, **dadurch gekennzeichnet, dass** die metallischen Dichtelemente (17a, 17b) mit einer metallischen Dichtfläche (16) in Wirkverbindung bringbar sind, wobei die Dichtfläche (16) und die Dichtelemente (17a; 17b) gehärtete Oberflächen aufweisen.

2. Absperrarmatur nach Anspruch 1, **dadurch gekennzeichnet, dass** die Dichtfläche (16) als kegelförmige Dichtfläche ausgebildet ist und die Dichtelemente (17a; 17b) als ringförmige Metalllippen (18a; 18b) ausgebildet sind, die unterschiedliche Durchmesser aufweisen.

3. Absperrarmatur nach Anspruch 1 oder 2, **dadurch gekennzeichnet, dass** die Dichtelemente (17a; 17b) an der Drehklappe (2) und die Dichtfläche (16) am Gehäuse (1) angeordnet sind.

4. Absperrarmatur nach einem der Ansprüche 1 bis 3, **dadurch gekennzeichnet, dass** die Dichtelemente (17a; 17b) an zumindest einem Metallring ausgebildet sind, der an der Drehklappe (2) befestigt ist.

5. Absperrarmatur nach einem der Ansprüche 1 bis 4, **dadurch gekennzeichnet, dass** am Gehäuse (1) in Durchströmungsrichtung vor der Dichtfläche (16) eine Gehäuseverengung (30) angeordnet ist.

6. Absperrarmatur nach Anspruch 5, **dadurch gekennzeichnet, dass** die Gehäuseverengung (30) als radiale Nut im Gehäuse (1) ausgebildet ist.

7. Absperrarmatur nach einem der Ansprüche 1 bis 6, **dadurch gekennzeichnet, dass** eine Schutzeinrichtung (35) zum Schutz der Dichtelemente (17a; 17b) bei geöffneter Drehklappe (2) vorgesehen ist.

8. Absperrarmatur nach Anspruch 7, **dadurch gekennzeichnet, dass** die Schutzeinrichtung (35) als im Gehäuse (1) angeordnetes Blech (36), insbesondere in Strömungsrichtung V-förmiges Blech, ausgebildet ist.

9. Absperrarmatur nach einem der Ansprüche 1 bis 8, **dadurch gekennzeichnet, dass** zwischen den Dichtelementen (17a; 17b) ein Ringraum (20) ausgebildet ist, der mit Sperrmedium und/oder Spülmedium beaufschlagbar ist.

10. Absperrarmatur nach einem der Ansprüche 1 bis 9, **dadurch gekennzeichnet, dass** die Drehklappe (2) exzentrisch, vorzugsweise doppel-exzentrisch, gelagert ist.

11. Verwendung einer Absperrarmatur nach einem der vorangegangenen Ansprüche in einer Ethylenanlage.

## Claims

1. Shut-off fitting for shutting off media which contain impurities, with a housing and with a rotatably mounted rotary flap, there being arranged between the housing and the rotary flap an annular sealing device which is formed by at least two metallic sealing elements spaced apart from one another axially in the throughflow direction of the shut-off fitting, **characterized in that** the metallic sealing elements (17a, 17b) can be brought into operative connection with a metallic sealing face (16), the sealing face (16) and 'the sealing elements (17a; 17b) having hardened surfaces.

2. Shut-off fitting according to Claim 1, **characterized in that** the sealing face (16) is designed as a conical sealing face, and the sealing elements (17a; 17b) are designed as annular metal lips (18a; 18b) which have different diameters.

3. Shut-off fitting according to Claim 1 or 2, **characterized in that** the sealing elements (17a; 17b) are arranged on the rotary flap (2) and the sealing face (16) is arranged on the housing (1).

4. Shut-off fitting according to one of Claims 1 to 3, **characterized in that** the sealing elements (17a; 17b) are formed on at least one metal ring which is fastened to the rotary flap (2).

5. Shut-off fitting according to one of Claims 1 to 4, **characterized in that** a housing contraction (30) is arranged, upstream of the sealing face (16) in the throughflow direction, on the housing (1).

6. Shut-off fitting according to Claim 5, **characterized in that** the housing contraction (30) is designed as a radial groove in the housing (1).

7. Shut-off fitting according to one of Claims 1 to 6, **characterized in that** a protective device (35) for protecting the sealing elements (17a; 17b) when the rotary flap (2) is open is provided.

8. Shut-off fitting according to Claim 7, **characterized in that** the protective device (35) is designed as a plate (36) especially a plate which is V-shaped in the flow direction, the said plate being arranged in the housing (1).

9. Shut-off fitting according to one of Claims 1 to 8, **characterized in that** an annular space (20) which can be acted upon by a blocking medium and/or a flushing medium is formed between the sealing elements (17a; 17b).

10. Shut-off fitting according to one of Claims 1 to 9, **characterized in that** the rotary flap (2) is mounted eccentrically, preferably double-eccentrically.

11. Use of a shut-off fitting according to one of the preceding claims in an ethylene plant.

## Revendications

1. Soupape d'arrêt pour arrêter des milieux contenant des impuretés, comprenant un boîtier et un clapet tournant monté à rotation, un dispositif d'étanchéité annulaire étant disposé entre le boîtier et le clapet tournant, lequel est formé par au moins deux éléments d'étanchéité métalliques espacés axialement l'un de l'autre dans la direction d'écoulement à travers la soupape d'arrêt, **caractérisée en ce que** les éléments d'étanchéité métalliques (17a, 17b) peuvent être amenés en liaison coopérante avec une surface d'étanchéité métallique (16), la surface d'étanchéité métallique (16) et les éléments d'étanchéité (17a ; 17b) présentant des surfaces trempées.

2. Soupape d'arrêt selon la revendication 1, **caractérisée en ce que** la surface d'étanchéité (16) est réalisée en tant que surface d'étanchéité de forme conique et les éléments d'étanchéité (17a ; 17b) sont réalisés en tant que lèvres métalliques annulaires (18a ; 18b), qui présentent des diamètres différents.

3. Soupape d'arrêt selon la revendication 1 ou 2, **caractérisée en ce que** les éléments d'étanchéité (17a ; 17b) sont disposés sur le clapet tournant (2) et la surface d'étanchéité (16) est disposée sur le boîtier (1).

4. Soupape d'arrêt selon l'une quelconque des revendications 1 à 3, **caractérisée en ce que** les éléments d'étanchéité (17a ; 17b) sont réalisés sur au moins une bague annulaire qui est fixée sur le clapet tournant (2).

5. Soupape d'arrêt selon l'une quelconque des revendications 1 à 4, **caractérisée en ce que** l'on dispose sur le boîtier (1) dans la direction d'écoulement traversant, avant la surface d'étanchéité (16), un rétrécissement du boîtier (30).

6. Soupape d'arrêt selon la revendication 5, **caractérisée en ce que** le rétrécissement du boîtier (30) est réalisé dans le boîtier (1) sous forme de rainure radiale.

7. Soupape d'arrêt selon l'une quelconque des revendications 1 à 6, **caractérisée en ce qu'**un dispositif de protection (35) pour la protection des éléments d'étanchéité (17a ; 17b) est prévu lorsque le clapet tournant (2) est ouvert.

8. Soupape d'arrêt selon la revendication 7, **caractérisée en ce que** le dispositif de protection (35) est réalisé sous forme de tôle (36) disposée dans le boîtier (1), notamment sous forme de tôle en forme de V dans la direction de l'écoulement.

9. Soupape d'arrêt selon l'une quelconque des revendications 1 à 8, **caractérisée en ce qu'**un espace annulaire (20) est réalisé entre les éléments d'étanchéité (17a ; 17b), lequel peut être sollicité avec un milieu de blocage et/ou un milieu de rinçage.

10. Soupape d'arrêt selon l'une quelconque des revendications 1 à 9, **caractérisée en ce que** le clapet tournant (2) est monté de manière excentrée, de préférence doublement excentrée.

11. Utilisation d'une soupape d'arrêt selon l'une quelconque des revendications précédentes dans une installation d'éthylène.
